# EUROPEAN PATENT APPLICATION

(11) **EP 1 199 862 A2**
(43) Date of publication of application: **24.04.2002**
(21) Application number: 01122943.2
(22) Date of filing: 25.09.2001
(51) Int. Cl.: H04L 29/06, H04M 7/00

(54) **Internet telephone system utilizing portable information apparatus and method thereof**

(30) Priority: 17.10.2000 JP 2000316976
(71) Applicant: Togoe, Hisatake, Tokyo (JP)
(72) Inventor: Togoe, Hisatake, Tokyo (JP)
(74) Representative: Hirsch, Peter, Dipl.-Ing.

(57) **Abstract**

There is an inconvenience in a conventional internet telephone that the conventional internet telephone cannot be utilized unless a personal computer is at hand. According to the present invention, there is provided an internet telephone system utilizing a portable information apparatus comprising: a first server or a POS system installed in a store to receive information transmitted from a portable information apparatus; a host computer for receiving information transmitted from said first server or said POS system; an internet telephone server for receiving said information transmitted from said host computer; and a second server for receiving information transmitted from said internet telephone server and installed by a provider to which other receiving party subscribes. In the present invention, a call can be made by the internet telephone readily anytime and anywhere and also telephone rate is low.

## Description

### BACKGROUD OF THE INVENTION

### 1. Field of the Invention

The present invention relates to an internet telephone system, particularly to an internet telephone system utilizing a portable(mobile) information apparatus such as cellular phone capable of speaking over an internet telephone anytime and anywhere by utilizing the portable information apparatus and method thereof.

### 2. Description of the Prior Art

At present, there is used, on a personal computer, an internet telephone capable of transmitting/receiving voice data via the Internet and speaking in real time. When the internet telephone is utilized on a personal computer, there are needed a microphone, a speaker and a software exclusive for the Internet. Further, speaking two parties must connect respective computers to the Internet and always start the software exclusive for the Internet.

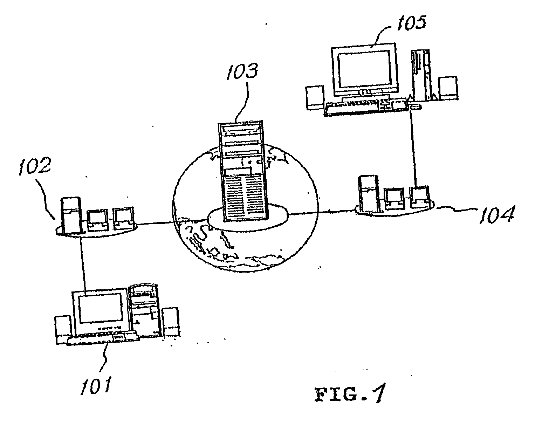

An explanation will be given of the conventional internet telephone in reference to FIG.1. In the drawing, a numeral 101 designates a personal computer constituting a terminal owned by a transmitting party and a numeral 102 designates a provider to which the transmitting party subscribes. When the transmitting party transmits a telephone number by using the personal computer 101, a signal corresponding to the telephone number is transmitted to an internet telephone server 103 of via the provider 102 to which the transmitting party subscribes and the signal transmitted to the internet telephone server 103 is transmitted to a personal computer 105 of other party of conversation via a provider 104 to which the other party of conversation subscribes.

When the internet telephone is utilized, there is charged no special rate for utilizing thereof, both parties of conversation bear rates of using the providers and telephone rates up to the providers and therefore, there is achieved an advantage of capable of speaking at the same rate domestically and overseas.

In this way, according to the internet telephone, the conversation rate is low, which is attractive for a speaker. However, there is an inconvenience of the internet telephone that the internet telephone cannot be utilized at other than a location where a personal computer is present. Therefore, for a busy person, there has been expected development of the internet telephone capable of speaking anytime and anywhere.

### SUMMARY OF THE INVENTION

The present invention has been carried out in view of the above-described situation and it is an object of the present invention to provide an internet telephone system utilizing a portable(mobile) information apparatus capable of utilizing an internet telephone anytime and anywhere even when there is not a personal computer at hand and a method thereof.

The present invention relates to an internet telephone system utilizing a portable information apparatus and a method thereof and the above described object of the present invention is achieved by providing an internet telephone system utilizing a portable information apparatus characterized in comprising: a portable information apparatus capable of transmitting information to a server or a POS system installed in a store such as a convenience store; the server or the POS system installed in the store for receiving the information transmitted from the portable information apparatus; a host computer for receiving information transmitted from the POS system installed in the store; an internet telephone server for receiving information transmitted from the host server; a server for receiving information transmitted from the internet telephone server and installed by a provider to which other party of conversation subscribes; and an information apparatus of the other party of conversation for receiving information transmitted from the server provided by the provider to which the other party of conversation subscribes.

Further, the above described object of the present invention is achieved further effectively by providing the internet telephone system utilizing a portable information apparatus according to Claim 1, characterized in that the server or the POS system installed in the store is provided at a convenience store, a gas station, a dining-out industry or the like.

Still further, the above described object of the present invention is achieved further effectively by providing the internet telephone system utilizing a portable information apparatus according to Claim 1, characterized in that the host computer is provided in a head office mechanism of the store for summerizingly controlling the information transmitted from respectives of a plurality of the stores.

The above described object of the present invention is achieved further effectively by providing the internet telephone system utilizing a portable information apparatus according to Claim 1, characterized in that the portable information apparatus is acellular phone.

Further, the above described object of the present invention is achieved further effectively by providing a method of an internet telephone utilizing a portable information apparatus, characterized in comprising: registering as a member of an internet telephone system utilizing a portable information apparatus; transmitting a telephone number of other party of conversation to a server installed in a store by using the portable information apparatus by the registered member; transmitting information received from the server installed in the store receiving the telephone number of the other party of conversation to a host computer; transmitting the information received by the host computer to an internet telephone; transmitting the information received by the internet telephone to a provider to which the other party of conversation subscribes; and transmitting the information from the provider receiving the information transmitted from the internet telephone to an information apparatus of the other party of conversation who subscribes to the provider.

### BRIEF DESCRIPTION OF THE DRAWINGS

In the accompanying drawings:
FIG. 1 is an explanatory view of a conventional internet telephone system;
FIG.2 is an explanatory view of an internet telephone system utilizing a portable information apparatus according to an embodiment of the present invention; and
FIG.3 is a flowchart to show a method of an internet telephone utilizing a portable information apparatus according to an embodiment of the present invention.

### DESCRIPTION OF THE PREFERRED EMBODIMENTS

A detailed explanation will be given as follows of embodiments of an internet telephone system utilizing a portable information apparatus and a method thereof according to the present invention based on the embodiments shown in the attached drawings.

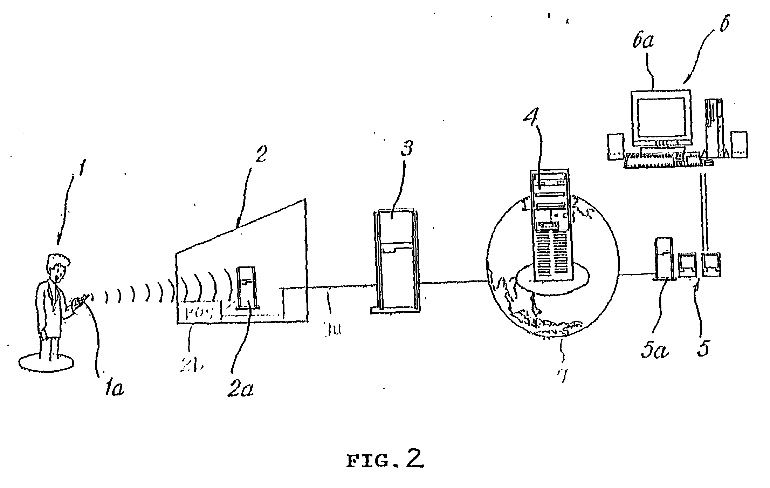

FIG.2 is an explanatory view of an embodiment of an internet telephone system utilizing a portable information apparatus according to the present invention and in the drawing, a numeral 1a designates a cellular phone(portable telephone) as a portable information apparatus carried by a transmitting party(human being) 1. A numeral 2 designates a convenience store which sells many goods, drinks, books or the like and provides many services such as copy service or banking system. There is ordinarily introduced a POS(Point Of Sales) system 2b to settle accounts in the convenience store 2. The POS system 2b is connected to a host computer 3 installed in a head office of the convenience store 2. The POS system 2b is a system of transmitting information of a retail store or the like and information at distribution stages of stocking, delivery and so on to a host(central) computer 3 installed at a head office or the like and carrying out sales control, commodity control, inventory control and the like. Further, the POS system 2b is connected to a server 2a which can communicate with the cellular phone 1a by radio system. Thereby to provide the server 2a and the POS system 2b in the convenience store 2, labor saving of a counter can be carried out and error can be prevented, needs of consumers are known at an early stage and the needs are analyzed to serve to promote sales.

Further, the POS system 2b is connected to the host computer 3 via a dedicated line 3a and the host computer 3 installed at a head office or the like and information of a retail store can be known immediately by the host computer 3. The present invention utilizes the POS system 2b used in the convenience store 2. The host computer 3 is connected to many other POS systems via dedicated lines, respectively.

A detailed explanation will be given of an internet telephone system utilizing a portable information apparatus according to the present invention as follows.

The transmitting party 1 transmits a telephone number of the receiving party 6 to the server 2a installed at the convenience store 2 by using the cellular phone 1a constituting an example of a portable information apparatus carried by the transmitting party 1 per se. The server 2a receives the telephone number(information) transmitted from the cellular phone 1a via the radio system and then transmits it to the host computer 3 via the POS system 2b and the dedicated line 3a.

Further, the store 2 installing the POS system 2b and the server 2a is not limited to the convenience store but a gas station, a dining-out industry or the like can utilize the system and in sum, an exclusive network may connect the respective store and the host computer 3. Further, the portable information apparatus is not simply limited to the cellular phone(portable telephone) 1a but in sum, the portable information apparatus may be an apparatus capable of transmitting information from the hand of the transmitting party 1 to the server 2a installed at the convenience store 2 or the like. The portable information apparatus exclusive for the present system can also be used. If the POS system 2b includes a radio system capable of communicating with the cellular phone 1a, the server 2a is not necessary. The POS system 2b may be one body with the server 2a.

The host computer 3 is installed at a head office or the like governing the respective stores and is inherently an apparatus for summerizingly processing information transmitted from the respective stores. According to the present invention, the server 2a in the convenience store 2 receives information transmitted from the cellular phone 1a, the POS system 2b transmits the received and processed information to the host computer 3 and then the host computer 3 transmits it to an internet telephone server 4 connected to the Internet 7. The information transmitted from the host computer 3 is received by the internet telephone server 4 and is brought into the Internet 7 and is transmitted to a provider 5 for the Internet 7. The provider 5 has a server 5a.

The provider 5 is a provider to which the receiving party 6 subscribes and the information transmitted from the internet telephone server 4 is received by the server 5a of the provider 5. The information received by the server 5a of the provider 5 is transmitted to a personal computer 6a constituting an information apparatus of the receiving party 6 who subscribes to the provider 5. In this way, the internet telephone is connected from the transmitting party 1 to the receiving party 6 via the server 2a, the POS system 2b, the host computer 3, the internet telephone server 4 and the server 5a.

Further, the information apparatus of the receiving party 6 is not limited to the personal computer 6a but in sum, the information apparatus may receive the information from the transmitting party 1.

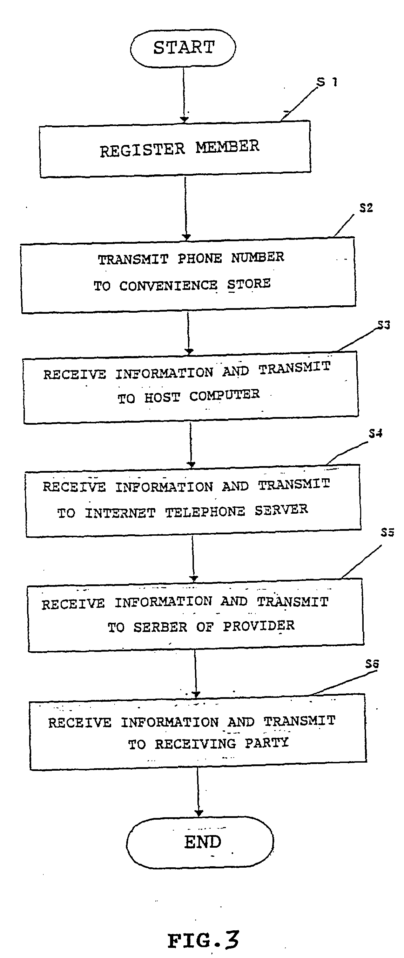

FIG.3 is a flowchart for explaining a method of an internet telephone utilizing a portable information apparatus according to the present invention. Notations S1 to S6 used in FIG.3 designate numbers of procedures(steps).

First, when a transmitting party 1 desires an internet telephone system utilizing the portable information apparatus, the transmitting party 1 registers as a member of the system of the present invention(Step S1). The member registered to the system transmits a telephone number(information) of the receiving party 6 to the server 2a in the convenience store 2 by using the cellular phone 1a constituting an example of the portable information apparatus(Step S2). The information transmitted from the cellular phone 1a by the member is received by the server 2a and the received information is processed and transmitted to the host computer 3 from the server 2a via the POS system 2b and the dedicated line 3a(Step S3).

At the host computer 3, the information transmitted from the server 2a(POS system 2b) installed in the convenience store 2 is received and the information is transmitted to the internet telephone server 4 installed in the Internet 7(Step S4). The information transmitted from the host computer 3 is received by the internet telephone server 4 and the received information is further transmitted to the server 5a of the provider 5(Step S5). The receiving party 6 subscribes to the provider 5, at the provider 5, the information transmitted from the internet telephone server 4 is received and the received information is transmitted to the personal computer 6a constituting an example of an information apparatus of the the receiving party 6(Step S6). Thereby to receive the information by the personal computer 6a, the transmitting party 1 can speak with the desired receiving party 6.

As has been explained above, according to the present invention, by transmitting the information from a portable information apparatus to a server installed in a store, a call can be made by an internet telephone and therefore, even when there is not a personal computer at hand, so far as there is a portable information apparatus, a call can be made by the internet telephone anytime and anywhere, which achieves an effect of being convenient.

Further, a call can be made by the internet telephone by utilizing an apparatus installed at a store such as a convenience store, a gas station or the like connected to a computer installed at a head office or the like by an exclusive network which has already being installed at respective stores and the head office and therefore, there is achieved an effect that a telephone rate is low.

## Claims

1. An internet telephone system utilizing a portable information apparatus comprising:
a first server or a POS system installed in a store to receive information transmitted from a portable information apparatus;
a host computer for receiving information transmitted from said first server or said POS system;
an internet telephone server for receiving said information transmitted from said host computer; and
a second server for receiving information transmitted from said internet telephone server and installed by a provider to which other receiving party subscribes.

2. An internet telephone system utilizing a portable information apparatus according to Claim 1, wherein said first server installed in said store is provided at a convenience store, a gas station or a dining-out industry.

3. An internet telephone system utilizing a portable information apparatus according to Claim 1 or 2, wherein said host computer is provided in a head office of said store for summerizingly controlling said information transmitted from respectives of a plurality of said stores.

4. An internet telephone system utilizing a portable information apparatus according to any of claims 1-3, wherein said portable information apparatus is a cellular phone.

5. An internet telephone system utilizing a portable information apparatus according to any of claims 1-4, wherein said information is telephone number.

6. An internet telephone system utilizing a portable information apparatus according to any of claims 1-5, wherein said first server and said POS system is one body.

7. An internet telephone system utilizing a portable information apparatus according to any of claims 1-6, wherein said POS system has a member capable of communicating with said portable information apparatus and said first server is deleted.

8. A method of an internet telephone utilizing a portable information apparatus, **characterized in** comprising:
registering as a member of an internet telephone system utilizing a portable information apparatus;
transmitting a telephone number of a receiving party to a first server or a POS system installed in a store by using said portable information apparatus by said registered member;
transmitting information received from said first server or said POS system receiving said telephone number of said receiving party to a host computer;
transmitting the information received by said host computer to an internet telephone server;
transmitting said information received by said internet telephone server to a provider to which said receiving party subscribes; and
transmitting said information from said provider receiving said information transmitted from said internet telephone to an information apparatus of said receiving party who subscribes to said provider.
